# EUROPÄISCHE PATENTANMELDUNG

(11) **EP 1 848 095 A2**
(43) Veröffentlichungstag der Anmeldung: **24.10.2007**
(21) Anmeldenummer: 07013102.4
(22) Anmeldetag: 26.04.2004
(51) Int. Cl.: H02K 9/20, H02K 9/06

(54) **Rolle mit Kühleinrichtung**

(30) Priorität: 30.05.2003 DE 10324664
(62) Teilanmeldung aus: 04729429.3
(71) Anmelder: Siemens Aktiengesellschaft, 80333 Munich (DE)
(72) Erfinder: Bott, Erich, 97618 Hollstadt (DE); Oestreich, Markus, 36110 Schiltz (DE); Platen, Markus Dr., 97616 Bad Neustadt (DE); Räder, Sebastian, 97654 Bastheim (DE); Vollmer, Rolf, 36129 Gersfeld (DE)

(57) **Zusammenfassung**

Die Herstellung, die Bauform und der Wirkungsgrad von Rollen beziehungsweise Rollenmotoren soll verbessert werden. Dazu wird vorgeschlagen, zur Herstellung eines hochpoligen Motors geringen Durchmessers, der in eine Rolle integrierbar ist, eine Kunststoffträgereinrichtung für die Einzelmagnete zu verwenden, die nach Einbau in ein Rückschlussrohr herausgedreht werden kann. Darüber hinaus wird zur Steigerung des Dauerdrehmoments vorgeschlagen, eine Rolle mit integriertem Rollenmotor (24) durch eine externe oder interne Kühleinrichtung (25,26) zu kühlen. Falls ferner bei Rollen, die auch gebremst werden müssen, die Bauform verkleinert werden soll, wird eine in die Rolle integrierbare Bremseinrichtung vorgeschlagen. Um schließlich das Kontaktieren des Stators bei dessen Herstellung zu vereinfachen, wird eine teilbare Achse mit entsprechenden Kontaktträgern auf beiden Achsteilen bereitgestellt.

## Beschreibung

Die vorliegende Erfindung betrifft Rollenmotoren und Rollen, in die derartige Rollenmotoren integriert sind. Die vorliegende Erfindung betrifft ferner Verfahren zum Herstellen von Rollenmotoren und Verfahren zum Entwärmen von Rollen mit integriertem Rollenmotor.

Bei Servoaußenläufermotoren mit kleinem Bohrungsdurchmesser müssen häufig verhältnismäßig teure, geschliffene Magnetringe für den Läufer eingesetzt werden. Des Weiteren stellt es ein Problem dar, Magnetringe mit der notwendigen Genauigkeit koaxial mit einem Rückschlussrohr auszurichten und darin zu befestigen.

Die in der Vergangenheit eingesetzten Motoren besaßen häufig nur eine geringere Polzahl. Daher war es ohne weiteres möglich, Läuferringe mit einer der Polzahl entsprechenden Anzahl von Einzelsegmenten ohne hohen Montageaufwand zusammenzusetzen. Darüber hinaus waren in der Vergangenheit üblicherweise geringere Energiedichten der eingesetzten Dauermagnete ausreichend. Demgegenüber fordern moderne, hochpolige Motoren hohe Energiedichten und kleine Pollücken. Dies wird mit einteiligen Dauermagneten aus Kostengründen kaum realisiert. Der Einsatz von Einzelsegmenten anstelle eines einteiligen Ringmagnets oder einiger weniger Einzelsegmente, die ebenfalls geschliffen werden müssten, gewährleistet zwar hohe Energiedichten und geringe Pollücken, aber der Montageaufwand ist relativ hoch.

Ein weiteres Problem bei der Herstellung von Rollenmotoren, die typischerweise als Außenläufermotoren realisiert werden, besteht darin, dass beim Schalten und Abbinden der Wickelköpfe der Statoren ein hoher manueller Aufwand notwendig ist. Des Weiteren ist es notwendig, die Anschlussleitungen durch die Achse des jeweiligen Stators zu führen. Ein Durchfädeln der Leitungen ist jedoch wiederum mit einem verhältnismäßig großen Montageaufwand verbunden. Um das Durchfädeln zu umgehen, könnte eine längsgeschlitzte Achse des Motors eingesetzt werden, in welche die Leitungen seitlich eingelegt werden können. Ein Schlitz in der Achse wirkt sich jedoch sehr nachteilig auf die Lagerstelle aus.

Aus den genannten Gründen werden die Drahtenden der Wicklungen eines Außenläufermotors üblicherweise händisch miteinander oder mit den Leistungs- beziehungsweise Anschlussleitungen verbunden. Dies erfolgt üblicherweise durch Verdrillen oder Verschweißen. Anschließend sind die Verbindungsstellen zu isolieren und an den Wickelkopf zu binden. Wegen der Nachteile einer geschlitzten Achse ist werden die Anschlussleitungen nach wie vor über die Hohlachse aus dem Motor herausgeführt werden. Daneben werden auch etwaige Steuerleitungen oder Signalleitungen durch die Hohlachse gefädelt.

Ein weiteres Problem bei Rollen mit integrierten Rollenmotoren besteht in deren Erwärmung. Grundsätzlich führt beim Aufbau von Rollen- und Bandtransportsystemen eine modulare und kompakte Bauweise aufgrund von kürzeren Montagezeiten vor Ort zu Kostenvorteilen. Der Antrieb des Transportsystems kann bekanntermaßen modular realisiert werden, wenn die Motoren nämlich als sogenannte Rollenmotoren innerhalb der Rollen angeordnet werden. Damit kommt es jedoch zu der genannten Erwärmung der Rollen.

Die Oberflächen der Rollen sind in der Regel nicht vor Berührungen geschützt. Dies bedeutet, dass nach einschlägigen Vorschriften eine Temperatur von ca. 75° C nicht überschritten werden darf. Der Wärmeübergangskoeffizient von der Rollenoberfläche zur Umgebung ist jedoch verhältnismäßig klein. Die dadurch bedingte geringe Wärmeabgabe an die Umgebung ist für Rollenmotoren eine begrenzende Größe für das Dauerdrehmoment. Für eine Lösung dieses Wärmeproblems sind stets weitere zentrale Anforderungen an Rollenmotoren zu beachten, die darin bestehen, einen sehr geringen Bauraum zu realisieren und Wartungsfreiheit soweit wie möglich zu gewährleisten. Aus diesem Grund kommen Rollenmotoren, die derzeit meist als Innenläufer mit Getriebe ausgeführt sind, als Lösung kaum in Betracht.

Walzen oder Rollen sind bei gewissen Anwendungen auch zu verzögern oder abzubremsen. Gleiches gilt für die entsprechenden Antriebe. Hierzu werden üblicherweise Bremssysteme an die Walzen oder Rollen angebaut. Eine andere Möglichkeit zum Abbremsen besteht darin, durch vorhandene Antriebselemente eine Verzögerung herbeizuführen. Diese genannten Bremssysteme besitzen jedoch einheitlich den Nachteil, dass sie relativ voluminös sind.

Die Aufgabe der vorliegenden Erfindung besteht somit darin, Rollenmotoren und Rollen vorzuschlagen, die den Anforderungen an geringen Montageaufwand und minimale Bauform Genüge leisten.

Erfindungsgemäß wird diese Aufgabe gelöst durch einen Rollenmotor mit einem Außenläufer, der eine Vielzahl von Einzelmagneten aufweist, die am Innenumfang eines Rückschlussrohrs angeordnet sind, und einer Trägereinrichtung, die zumindest teilweise radial innerhalb der Einzelmagnete angeordnet ist und die radial nach außen weisende, axial verlaufende Abstandshalter zum Beabstanden der Einzelmagnete in Umfangsrichtung aufweist.

Entsprechend ist vorgesehen ein Verfahren zum Herstellen eines Rollenmotors oder Außenläufermotors durch Bereitstellen einer rohrförmigen Trägereinrichtung mit radial nach außen weisenden, axial verlaufenden Abstandshaltern, Fixieren einer Vielzahl von Einzelmagneten oder Magnetrohlingen am Außenumfang der Trägereinrichtung, jeweils einen Einzelmagneten oder Magnetrohling zwischen zwei Abstandshaltern, Einschieben und Fixieren der Trägereinrichtung mit den Einzelmagneten oder Magnetrohlingen in einem Rückschlussrohr.

Die erfindungsgemäße Trägereinrichtung kann bei Rollenmotoren eingesetzt werden, bei denen ein Pol mit mehreren Einzelmagneten anstelle eines rundgeschliffenen Polsegments, das sehr teuer in der Herstellung ist, eingesetzt werden. Darüber hinaus kann die erfindungsgemäße Trägereinrichtung auch bei sehr hochpoligen Rollenmotoren beziehungsweise Außenläufermotoren eingesetzt werden, wobei für jeden Pol ein Einzelmagnet eingesetzt wird. In beiden Fällen bildet die Trägereinrichtung am günstigsten im Wesentlichen ein Rohr oder eine Hülse, auf die die Einzelmagnete von außen aufgebracht werden können.

Die Trägereinrichtung kann aus einem günstig herzustellenden Kunststoffmaterial bestehen. Ferner kann sie Klebebetten besitzen, in denen Klebstoff die Einzelmagnete an die Trägereinrichtung fixiert. Auf diese Weise kann die Trägereinrichtung mit den Einzelmagneten auf einfache Weise in ein Rückschlussrohr eingeschoben werden.

Die Trägereinrichtung kann durch einen Spreizdorn an das Rückschlussrohr angepresst und verklebt werden. Damit die Trägereinrichtung günstigere Dehnungseigenschaften besitzt, kann das Rohr der Trägereinrichtung in einem oder mehreren Abschnitten eine verminderte Wandstärke besitzen.

Nach dem Einbau in das Rückschlussrohr kann die Trägereinrichtung ausgedreht werden, so dass im Wesentlichen nur die Abstandshalter zwischen den Einzelmagneten oder den Magnetrohlingen bestehen bleiben. Damit kann der Abstand zwischen Stator und Rotor auf ein Minimum reduziert werden. Die Abstandshalter, die die Einzelmagnete vor und nach dem Fixieren im Rückschlussrohr axial ausrichten, bleiben bestehen.

Falls nicht vorgefertigte Einzelmagnete bei der Herstellung des Außenläufers verwendet werden, können die Magnetrohlinge nach dem Montieren beziehungsweise Fixieren in dem Rückschlussrohr magnetisiert werden.

Außerdem wird erfindungsgemäß bereitgestellt ein Rollenmotor mit einer Achse, auf der ein Stator angeordnet ist, und einer Kontaktiereinrichtung zum Kontaktieren des Stators mit Versorgungsleitungen, wobei die Achse in einen ersten und zweiten Achsabschnitt geteilt ist und die Kontaktiereinrichtung zwei Kontaktträger aufweist, wobei ein erster Kontaktträger auf dem ersten Achsabschnitt und ein zweiter Kontaktträger auf dem zweiten Achsabschnitt angeordnet ist, und wobei der erste und der zweite Kontaktträger zur Herstellung einer elektrischen Verbindung ineinander herausnehmbar eingesteckt sind.

Bei derartigen Rollenmotoren, deren Kontaktiereinrichtung zum Kontaktieren des Stators mit den Versorgungsleitungen zwei Kontaktträger aufweist, kann der erste Kontaktträger Klemmeinrichtungen umfassen, mit denen zumindest der Wickelkopf des Stators verschaltet ist. Dies hat den Vorteil, dass der Stator durch einen automatisierten Wickler unter Zuhilfenahme der Klemmeinrichtungen gewickelt und gleichzeitig verschaltet werden kann. Hierzu kann mindestens eine der Klemmeinrichtungen einen Schneidklemmkontakt aufweisen.

Auf dem ersten, dem Statorblechpaket zugeordneten Kontaktträger kann ein Sensor, insbesondere ein Infrarotsensor zur Überwachung der Wicklungstemperatur, angeordnet sein, der auch über die beiden Kontaktträger elektrisch kontaktiert wird.

Die Klemmeinrichtungen können nicht nur zum Verschalten der Wicklungen des Stators sondern auch zum Fixieren der freien Enden oder biegeschlaffen Abschnitte der Wicklungsleitungen verwendet werden. Damit erübrigt sich beispielsweise ein Abbinden dieser Leitungsabschnitte.

Der zweite Achsabschnitt kann hohl ausgeführt sein. In diesem Fall lassen sich die Leitungen zum Kontaktieren des Kontaktträgers durch eine oder mehrere radial gerichtete Bohrungen oder Aussparungen ins Innere des zweiten Achsenabschnitts legen und im Inneren des zweiten Achsenabschnitts bis zu dessen Ende führen.

In dem Ende des zweiten Achsenabschnitts, das dem ersten Achsenabschnitt abgewandt ist, ist vorzugsweise ein Stecker angeordnet, der mit dem zweiten Kontaktträger elektrisch verbunden ist. Auf diese Weise kann der Rollenmotor modular aufgebaut werden.

Des Weiteren wird die oben genannte Aufgabe gelöst durch eine Rolle mit einem integrierten Rollenmotor und einer Kühleinrichtung, die ebenfalls in die Rolle integriert oder außerhalb angeordnet ist.

Ein entsprechendes Verfahren zum Entwärmen zumindest eines Abschnitts einer Rolle, in die ein Rollenmotor integriert ist, durch Transportieren der Abwärme des Rollenmotors zu einer Kühleinrichtung, die ebenfalls in die Rolle integriert oder außerhalb angeordnet ist, ist ebenfalls vorgesehen.

Die Kühleinrichtung umfasst vorzugsweise einen Kühlkörper und eine erste Heatpipe. Durch diese Heatpipe, die aus der Kühltechnik bekannt ist, lässt sich die Wärme sehr wirkungsvoll von dem Rollenmotor in den Kühlkörper transportieren.

Vorteilhafterweise ist der Rollenmotor ein Außenläufermotor und das Außenrohr der Rolle wird als Rückschlussrohr des Außenläufermotors verwendet. Auf diese Weise kann ein dezentraler, wartungsfreier Antrieb für ein Rollen- oder Bandtransportsystem realisiert werden.

Das Außenrohr der Rolle kann senkrecht zu ihrer axialen Richtung geteilt sein, wobei der Rollenmotor in einem der Teile angeordnet ist. Dies hat unter Umständen Vorteile bei der Montage des Rollensystems.

Auf der Rollenoberfläche kann eine Wärmeisolationsschicht aufgetragen sein. Diese verhindert eine Überhitzung der zu transportierenden Güter, aber auch Verbrennungen, die durch Berühren der Rollen entstehen können.

Gegebenenfalls kann durch eine zweite Heatpipe, die in die Kühleinrichtung ragt, Wärme von dem Kühlkörper in ein Lagerschild der Rolle transportiert werden. Damit wird auch die Wärme von dem Kühlkörper sehr wirksam aus dem Inneren der Rolle abgeleitet.

Bei einer vorteilhaften Ausgestaltung kann ein Lagerschild als Lüfterrad ausgebildet oder ein separates Lüfterrad im Inneren der Rolle vorgesehen sein. Damit kann eine Kühlung durch Umluft, Abluft, Hohlachsen-Lüftung und/oder Luftspalt-Lüftung realisiert werden. Darüber hinaus kann die Kühleinrichtung einen Eigenlüfter, einen Fremdlüfter, einen Wärmeabstreifer, eine Wärmeableitrolle oder eine Wärmepumpe umfassen.

Vorzugsweise wird der Rollenmotor als Oberwellenmotor ausgestaltet. Dieser hat den Vorteil, dass das tatsächlich auftretende Feld des Stators besser ausgenutzt werden kann.

Zur Ansteuerung des Rollenmotors ist es häufig notwendig, die Rotorlage oder Rotorgeschwindigkeit zu ermitteln. Diese können indirekt über eine im Rollenmotor abgegriffene EMK (elektromotorische Kraft) gewonnen werden.

In einer speziellen Ausgestaltung des Rollenmotors können dessen Nutverschlüsse durch radial eingebrachtes Rundmaterial realisiert werden.

Schließlich ist erfindungsgemäß auch vorgesehen eine Rolle mit einer Achse, auf der die Rolle drehbar gelagert ist, wobei in der Rolle eine Bremseinrichtung zum Bremsen der Rolle angeordnet ist.

Die Bremseinrichtung kann ihrerseits indirekt über einen in die Rolle integrierten Rollenmotor an das Außenrohr der Rolle gekoppelt sein. Die Bremseinrichtung kann ferner in einem in die Rolle integrierten Rollenmotor angeordnet sein. Durch diese Kombination von Bremssystem und Antriebseinheit ist eine einfache und schnelle Montage möglich.

Vorzugsweise ist die Bremseinrichtung elektromagnetisch ausgestaltet. Derartige Bremsen sind für Rollensysteme sehr zuverlässig und gut ansteuerbar.

Vorteilhafterweise wird die Achse, auf der die Bremseinrichtung angeordnet ist, hohl ausgebildet. Dadurch können die Versorgungsleitungen für die Bremseinrichtung durch die Achse hindurchgeführt werden.

Generell kann die vorliegende Erfindung für jede Art von Außenläufermotoren, insbesondere auch Oberwellenmotoren, verwendet werden. Eine Beschränkung auf Rollenmotoren besteht nicht.

Die vorliegende Erfindung wird nun anhand der beigefügten Zeichnungen näher erläutert, in denen zeigen:
- FIG 1: einen Querschnitt durch eine erfindungsgemäße Trägereinrichtung;
- FIG 2: eine Trägereinrichtung gemäß FIG 1 mit eingesetzten Einzelmagneten;
- FIG 3: eine Anordnung gemäß FIG 2 mit aufgesetztem Rückschlussrohr;
- FIG 4: eine Anordnung gemäß FIG 3 mit ausgedrehter Trägereinrichtung;
- FIG 5: eine perspektivische Ansicht eines Rollenmotors mit teilbarer Achse;
- FIG 6: eine Detailansicht eines Kontaktträgers am Statorwickelkopf;
- FIG 7: eine Detailansicht gemäß FIG 6 mit eingesetzten Schneidklemmen;
- FIG 8: eine Querschnittsansicht durch zwei miteinander verbundene Kontaktträger mit Schneidklemme;
- FIG 9: eine perspektivische Detailansicht des zweiten zur Kontaktierung verwendeten Achsenteils;
- FIG 10 bis 29: Querschnitte und Draufsichten auf Rollen mit unterschiedlichen Kühleinrichtungen;
- FIG 30: einen Querschnitt durch einen Oberwellen- Außenläufermotor;
- FIG 31: einen Querschnitt durch einen Stator mit speziellem Nutverschluss;
- FIG 32: einen Querschnitt durch einen Rollenmotor mit erfindungsgemäß angekoppelter Bremseinrichtung und
- FIG 33: einen Querschnitt durch die in FIG 32 dargestellte Einheit eingebaut in ein Rohr.

Die nachfolgend näher beschriebenen Ausführungsformen stellen bevorzugte Ausführungsbeispiele der vorliegenden Erfindung dar.

Die Herstellungskosten eines geschliffenen Magnetrings sind, wie oben bereits erwähnt, verhältnismäßig hoch. Daher werden die Magnetringe vielfach durch eine Vielzahl von Einzelmagneten ersetzt. Hierbei bestehen jedoch Probleme, diese Vielzahl von Einzelmagneten oder unmagnetisierten Magnetrohlingen für einen Außenläufermotor in ein Rückschlussrohr zu montieren. Insbesondere bestehen Probleme, die axiale Ausrichtung der Einzelmagnete während der Montage aufrechtzuerhalten. Daher erfolgt die Magnetisierung vielfach erst nach der Montage ins Rückschlussrohr. Ist jedoch die Dicke des Rückschlussrohrs zu groß, der Durchmesser der Anordnung zu klein oder die Polzahl des Außenläufers zu hoch, so ist eine nachträgliche Magnetisierung in der Regel nicht möglich.

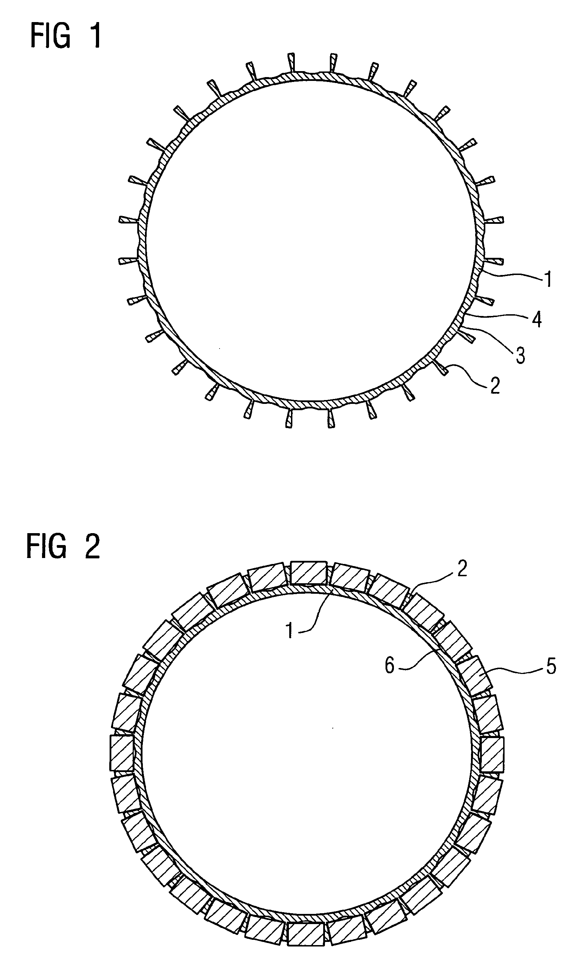

Aus diesen Gründen wird zur Montage eines Außenläufers erfindungsgemäß die in FIG 1 dargestellte Trägereinrichtung eingesetzt. Sie besteht vorzugsweise aus einem Kunststoff. Die Trägereinrichtung besteht im Wesentlichen aus einer rohrförmigen Trägerhülse 1. Diese weist eine Vielzahl radial nach außen stehender, sich axial als Rippen erstreckender Abstandshalter 2 auf. Zwischen zwei Abstandshaltern 2 wird jeweils ein Einzelmagnet auf Auflageflächen 3 aufgebracht. Um die Einzelmagnete zu fixieren sind Klebebetten 4 vorgesehen, in die Klebstoff eingebracht werden kann.

FIG 2 zeigt nun im Querschnitt eine Trägereinrichtung, in die von außen Einzelmagnete 5 eingesetzt sind. Sie sind jeweils mit Klebstoff 6 fixiert und durch die Abstandshalter 2 in axialer Richtung zueinander ausgerichtet. Die Abstandshalter 2 in den Pollücken dienen auch zur Schaffung von Kapillarspalten, die das Verteilen des Klebstoffs 6 beziehungsweise einer Vergussmasse begünstigen. Zur Montage ist damit lediglich ein Klebedepot auf der Trägerhülse 1 bereitzustellen.

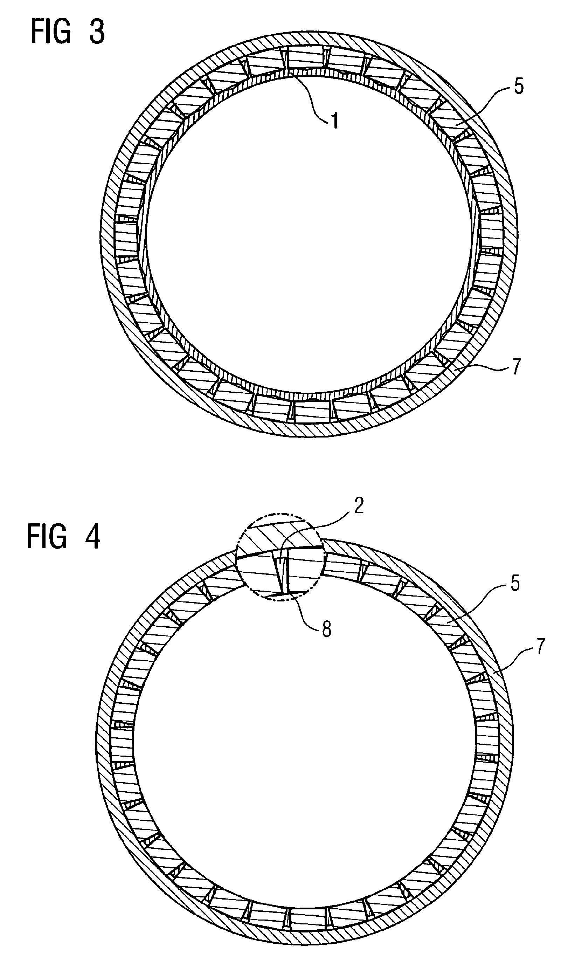

Der Querschnitt von FIG 3 zeigt den Zustand, in dem die Anordnung von FIG 2 in ein Rückschlussrohr 7 eingebaut ist. Die Anordnung aus der Trägerhülse 1 und den Einzelmagneten 5 wird in dem Rückschlussrohr 7 vergossen. Auch hierzu sind die Abstandshalter 2 so dimensioniert, dass für das Ausgießen beziehungsweise Einkleben in das Rückschlussrohr 7 entsprechend geeignete Kapillarkräfte auftreten.

Um den in FIG 2 dargestellten vorgefertigten Ring an das Rückschlussrohr 7 anzupressen, wird ein Spreizdorn verwendet, der in die Trägerhülse 1 eingeführt wird. Damit kann der toleranzbedingte Luftspalt zum Rückschlussrohr 7 auf ein Minimum reduziert werden. Dabei ist es günstig, wenn die Trägerhülse 1 genügend elastisch gestaltet ist. Dies kann durch eine geeignete Kunststoffauswahl oder beispielsweise durch eine partiell verminderte Wandstärke der Trägerhülse erreicht werden.

Als letzter Fertigungsschritt für den Außenläufer, der in FIG 4 im Querschnitt dargestellt ist, wird die Trägerhülse 1 aus dem in FIG 3 dargestellten Läufergebilde bis an die Dauermagnete 5 ausgedreht. Dadurch wird ein kleiner Luftspalt zwischen Läufer und Ständer mit erforderlicher Genauigkeit realisiert. Da die Einzelmagnete 5 rechteckförmigen Querschnitt besitzen, bleibt an der Läuferinnenwand jeweils zwischen zwei Einzelmagneten 5 ein Restträgerabschnitt 8 bestehen. Im Wesentlichen sind die Einzelmagnete 5 an der Läuferinnenwand jedoch frei gedreht.

Durch die Trägerhülse als sogenanntes "teilweise verlorenes Hilfsmittel" wird die technisch nur mit hohem Aufwand beherrschbare Einbringung von Magneten in ein Rohr auf ein leicht automatisierbares, radiales Aufbringen der Einzelmagnete von außen zurückgeführt.

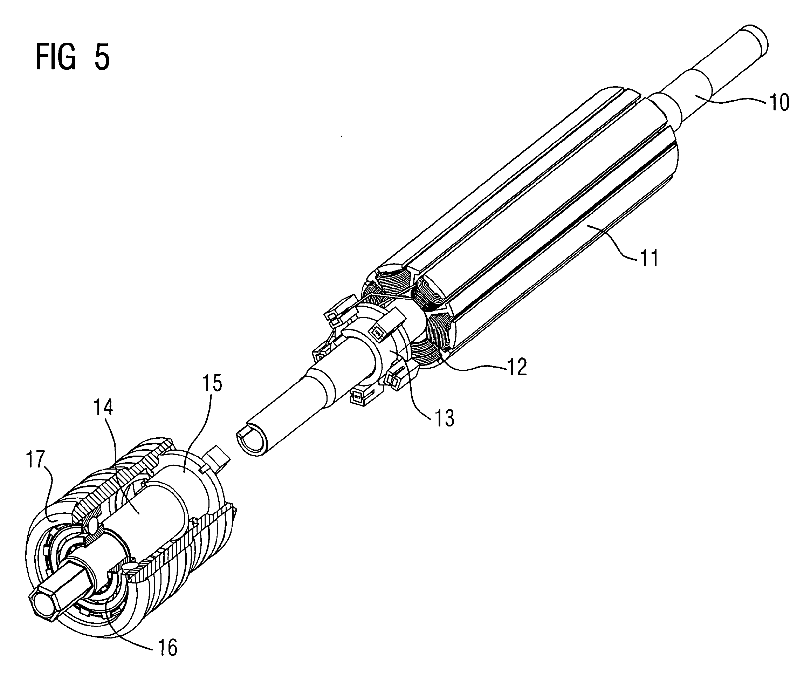

Das Kontaktieren aber auch das Schalten und Abbinden eines Stators eines Außenläufermotors beziehungsweise Rollenmotors ist verhältnismäßig aufwändig. Um diesen Fertigungsprozess zu vereinfachen beziehungsweise zu automatisieren, wird erfindungsgemäß ein Stator mit geteilter Achse vorgeschlagen, wie er in FIG 5 dargestellt ist. Auf einem ersten Achsenabschnitt 10 ist ein Statorblechpaket 11 mit Wicklungen 12 angeordnet. Zur Kontaktierung der Wicklungen 12 dient ein statorseitiger, erster Kontaktträger 13.

Der erste Achsenabschnitt 10 ist in einen zweiten Achsenabschnitt 14 einsteckbar. An dem dem Stator zugewandten Ende des zweiten Achsenabschnitts 14 ist ein zweiter Kontaktträger 15 angeordnet. Dieser dient zu Kontaktierung mit dem ersten Kontaktträger 13. An dem zweiten Achsenabschnitt 14 ist mittels eines Kugellagers 16 eine Außenrohrlagerbuchse 17 gelagert.

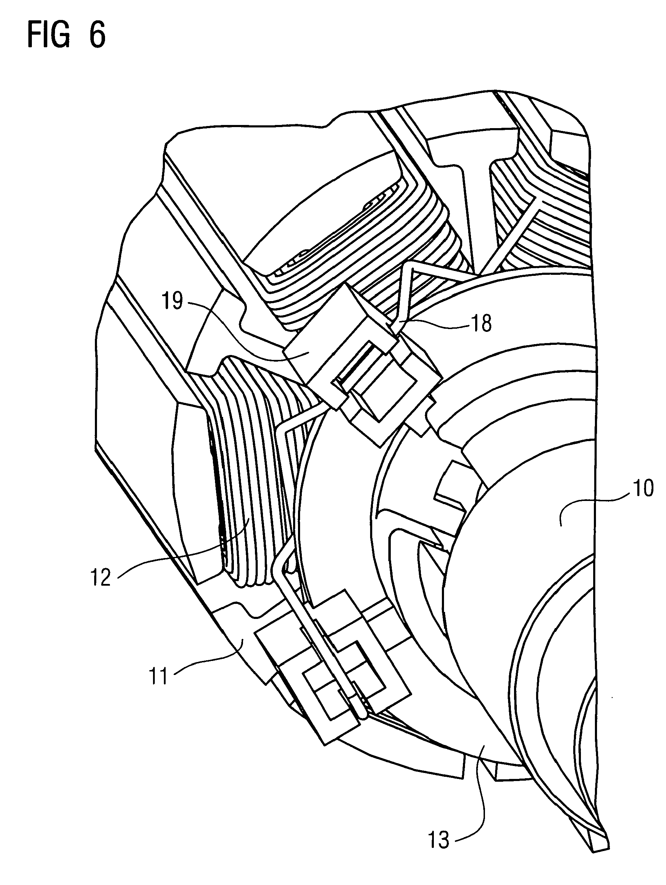

In FIG 6 ist der erste Kontaktträger 13 einschließlich der Anschlüsse der Statorwicklungen 12 im Detail dargestellt. Ein Wicklungsdraht 18 ist durch Formkonturen 19 geführt. Dies kann im Prozess der Direktbewicklung unmittelbar durch den automatischen Wickler erfolgen, so dass ein sonst üblicher. manueller Schalt- und Abbindeaufwand reduziert werden kann. Auch der Wicklungsanfang und das Wicklungsende können mit Hilfe der Formkonturen 19 des axial vor der Wicklung 12 angeordneten Kontaktträgers 13 an definierten Stellen fixiert werden.

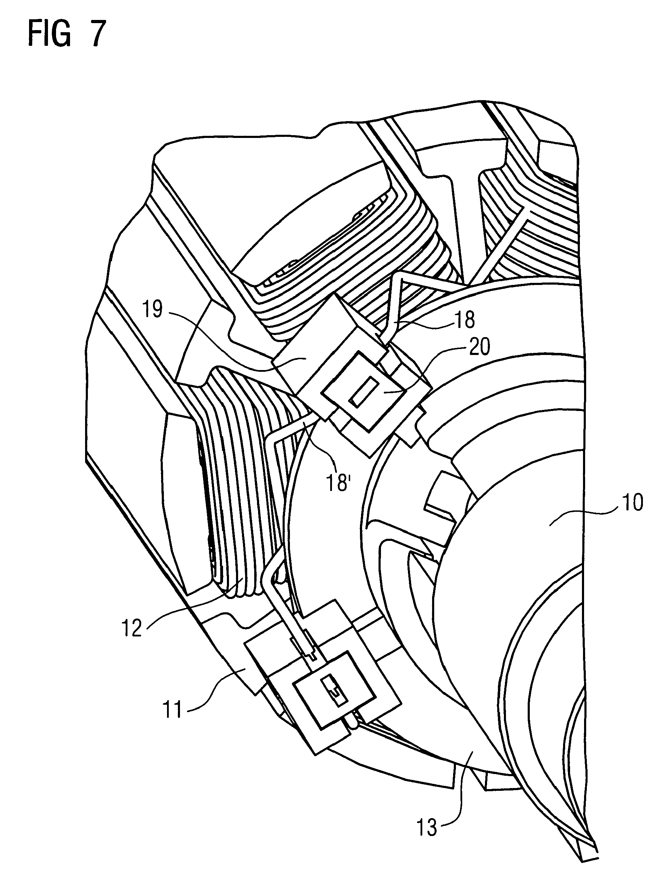

Dort, wo nun Wickeldrähte 18 zusammen verschaltet an einer Stelle mit Hilfe einer Formkontur 19 vorfixiert sind, kann eine maschinelle Verbindung erfolgen. Dieses Verbinden kann durch Schweißen oder, wie in FIG 7 dargestellt ist, einen in eine Tasche eingepressten Schneidklemmkontakt 20 erfolgen. Auf diese Weise können Leitungen, ohne sie zu trennen, mit weiteren Leitungen zusammengeschaltet werden. Ferner können biegeschlaffe Teile ohne Abbinden fixiert werden.

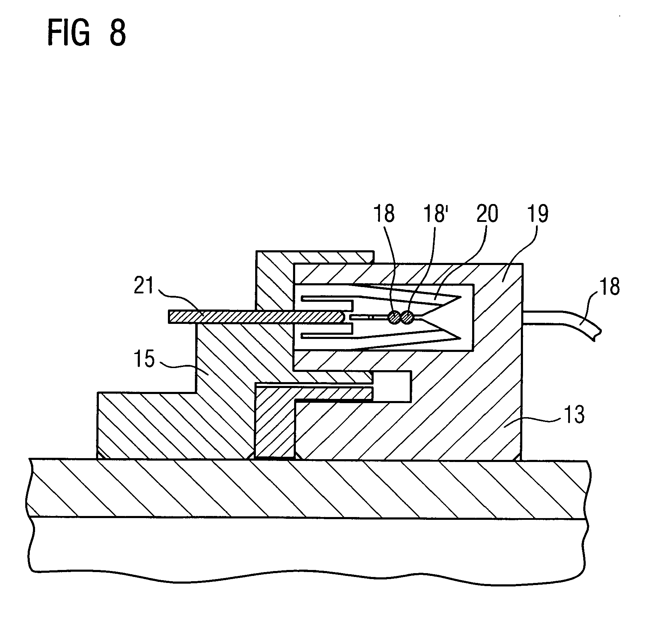

FIG 8 zeigt einen Querschnitt durch einen Schneidklemmkontakt 20, der in die Formkontur 19 integriert ist. Der erste Kontaktträger 13 ist dabei in den zweiten Kontaktträger 15 eingeschoben. Der elektrische Kontakt wird hergestellt, indem der Schneidklemmkontakt 20 mit einer Außenleitung 21, die in den zweiten Kontaktträger 15 integriert ist, verbunden wird. In den Schneidklemmkontakt 20 sind in diesem Fall zwei Wicklungsleitungen 18 und 18' zur Verbindung miteinander eingeschnitten.

Die Schneidklemme 20 kann, wie erwähnt, dazu verwendet werden, ein Wicklungsende zu fixieren. Soll dagegen ein biegeschlaffes Teil der Wicklung fixiert werden, so reicht hierfür auch eine lose Formkontur 19 mit geeigneter Gestalt ohne eine Schneidklemme 20 (vergleiche FIG 6).

Der Kontaktträger 13 ist darüber hinaus auch als Stützpunkt für einen Infrarotsensor (nicht dargestellt), mit welchem die Wicklungstemperatur überwacht werden kann, geeignet. Auch dieser Infrarotsensor kann in Schneidklemmtechnik kontaktiert werden. Die elektrische Kontaktierung kann auch hier über den zweiten Kontaktträger 15 erfolgen.

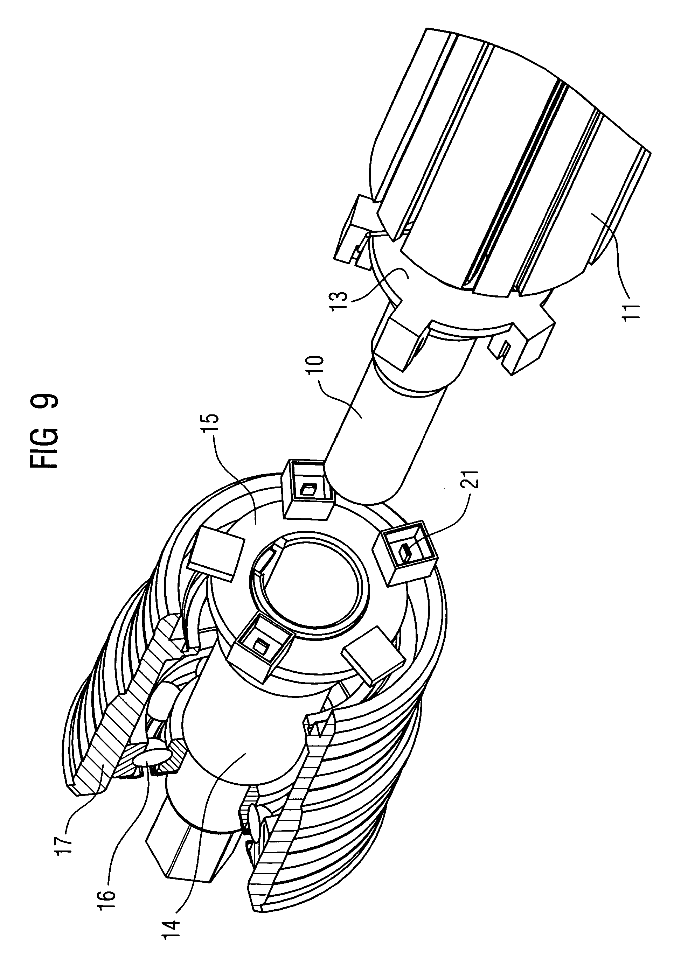

Der zweite Achsenabschnitt ist zur Durchführung von Leitungen und zum Einstecken des ersten Achsenabschnitts 10 hohl ausgeführt. Die Anschlussleitungen 21 des zweiten Kontaktträgers 15 werden, wie dies in FIG 9 nicht zu sehen ist, durch radiale Bohrungen beziehungsweise Aussparungen ins Innere des zweiten Achsenabschnitts 14 geführt.

An dem dem Stator gegenüberliegenden Ende des zweiten Achsenabschnitts 14 befindet sich in dessem Inneren (ebenfalls nicht dargestellt) ein Anschlussstecker für den Motor. In diesem sind die angeschlagenen Kontaktelemente der anderen Seite der Anschlussleitungen 21 befestigt. Der Stecker wird mit einer am Kontaktträger befindlichen Formkontur mit den Leitungen durch die Lagerbuchse in seine Endposition hindurchgeschoben und dort von dieser auch abgestützt.

Der zweite Achsenabschnitt 14 ist im Bereich der Lagerstelle des Kugellagers 16 in Form einer Lagerbuchse ausgebildet, damit ein guter Lagersitz gewährleistet ist. Wird nun die Lagerbuchse beziehungsweise der zweite Achsenabschnitt 14 auf den ersten Achsenabschnitt 10 aufgepresst, so kommt es gleichzeitig zur Verbindung der in den beiden Kontaktträgern 13 und 15 befindlichen Kontaktelemente.

Durch das erfindungsgemäße Teilen der Achse ergibt sich nicht nur ein Vorteil hinsichtlich der Rollenmontage sondern auch ein Vorteil bei der Herstellung der eigenangetriebenen Rolle, da der zweite Achsenabschnitt 14 nicht geschlitzt zu werden braucht und die Anschlussleitungen für die Wicklung nicht durch ein längeres Rohr gefädelt werden müssen. Darüber hinaus kann, wie bereits erwähnt, durch geeignete Gestaltung der Formkonturen 19 des ersten Kontaktträgers 13 gleichzeitig ein automatisches Wickeln und Verschalten der Statorwicklung durchgeführt und auf ein Abbinden verzichtet werden.

Mit der Integration des Rollenmotors in die Rolle ist ein dezentraler, wartungsfreier Antrieb für ein Rollen- oder Bandtransportsystem realisierbar. Um das Problem der Entwärmung zu lösen, sind erfindungsgemäß in den Rollen Kühleinrichtungen vorgesehen. Damit jedoch die Stromwärmeverluste von Anfang an gering gehalten werden, sollte beispielsweise ein hochpoliger, permanent erregter Drei-Phasen-Synchronmotor eingesetzt werden.

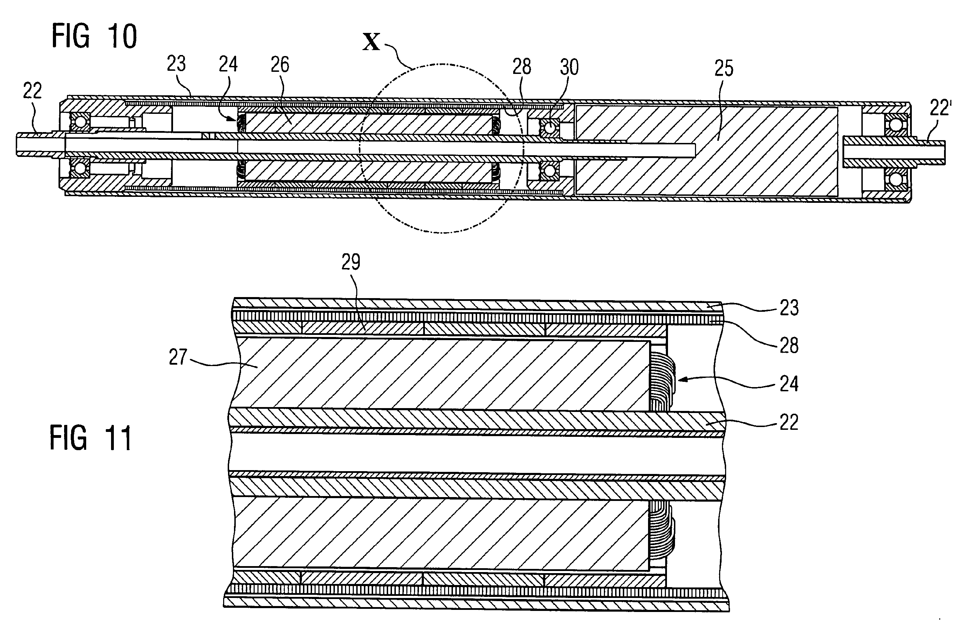

In FIG 10 ist hierzu ein Ausführungsbeispiel einer derartigen Rolle im Querschnitt dargestellt. Auf einer geteilten Achse 22, 22' ist das Außenrohr 23 einer Rolle gelagert. Im Inneren der Rolle ist auf der Teilachse 22 ein Außenläufermotor 24 und ein Kühlkörper 25 gelagert. Über eine aus der Kühltechnik bekannte Heatpipe 26 wird die Verlustwärme vom Außenläufermotor 24 zum Kühlkörper 25 transportiert.

In FIG 11 ist ein Ausschnitt X von FIG 10 vergrößert dargestellt. Dort ist der Stator 27 zu erkennen, der auf die Achse 22 montiert ist. Der Außenläufer besteht in bekannter Weise aus einem Rückschlussrohr 28 und mehreren an dessen Innenseite angeordneten Permanentmagneten 29. Damit der Luftspalt zwischen dem Stator 27 und dem Außenläufer 28, 29 definiert eingehalten wird, ist, wie aus FIG 10 ersichtlich, das Rückschlussrohr 28 über ein Lager 30 in der Rohrmitte gelagert.

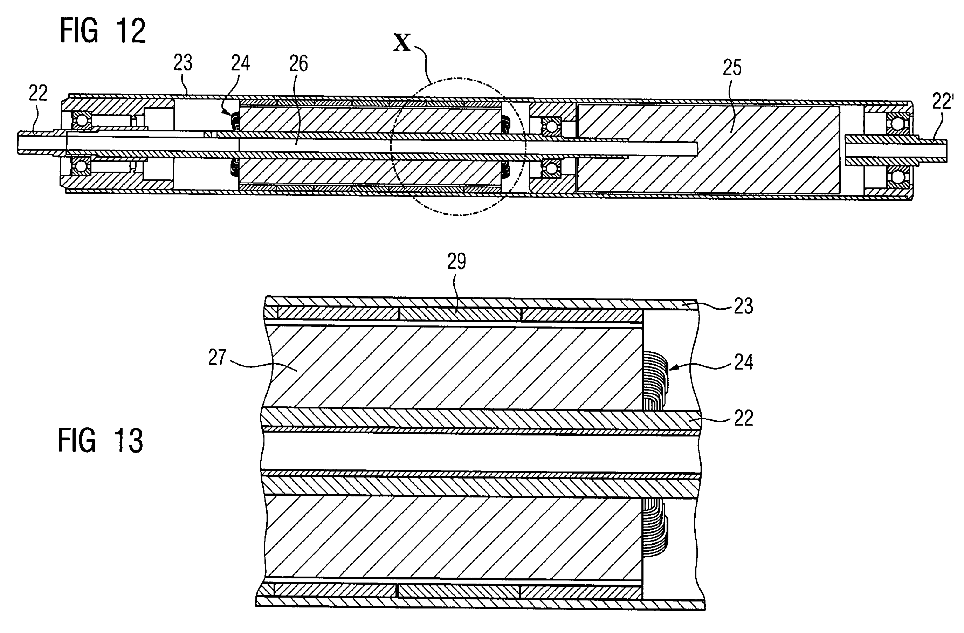

Durch den Einsatz der Heatpipe 26 kann ein Teil der Verlustwärme in axialer Richtung aus dem Motor 24 über den Kühlkörper 25 an das Außenrohr 23 der Rolle abgeführt werden. Durch die Nutzung eines größeren Teils der Rollenoberfläche sowie weiterer konstruktiver Maßnahmen, die im Zusammenhang mit den folgenden Figuren 12 bis 31 erläutert werden, kann die Entwärmung des Motors verbessert und damit das Drehmoment erhöht werden.

In den FIG 12 und 13 ist eine zweite Ausführungsform einer Rolle mit Entwärmung dargestellt. Der Aufbau der Rolle entspricht im Wesentlichen dem von FIG 10 und 11. Der Unterschied besteht lediglich darin, dass bei dieser zweiten Ausführungsform die Funktion des Rückschlussrohrs durch das Außenrohr 23 übernommen ist. Voraussetzung dafür ist, dass das Außenrohr die entsprechenden magnetischen Eigenschaften besitzt. Eine Detailansicht eines Ausschnitts X von FIG 12 ist wiederum in FIG 13 dargestellt.

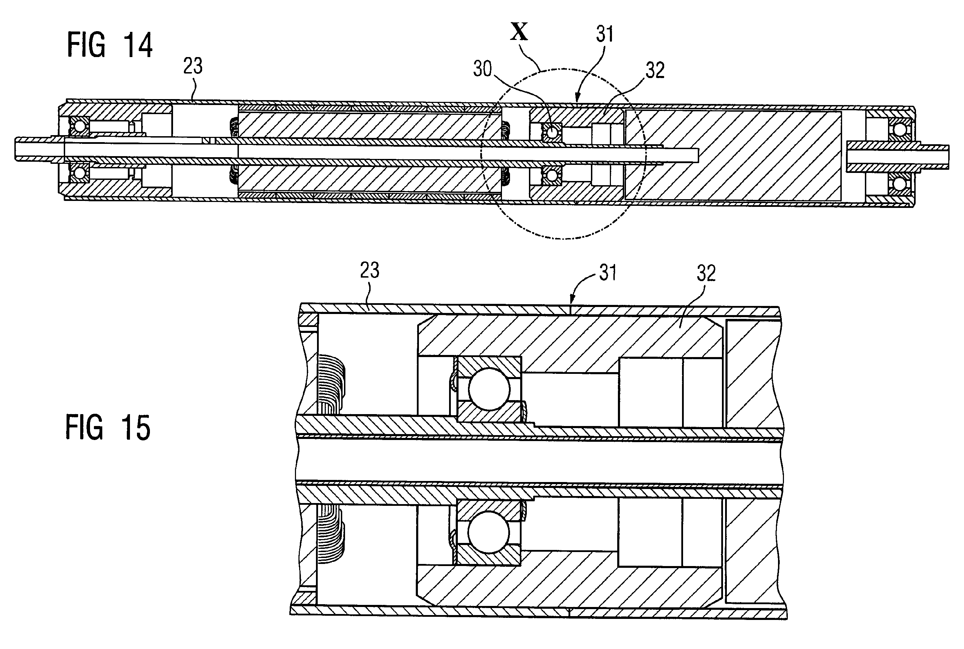

Eine dritte Ausführungsform einer Rolle mit Entwärmung ist in den FIG 14 und 15 dargestellt. Auch hier ist in FIG 15 der Detailausschnitt X von FIG 15 vergrößert dargestellt. Der Aufbau der Rolle entspricht im Wesentlichen dem von FIG 12 beziehungsweise FIG 13. Der Unterschied besteht jedoch darin, dass das Außenrohr 23 der Rolle durch eine Teilung 31 etwa im Mittelbereich der Rolle in zwei Hälften geteilt ist. Hierzu ist die Lagerbuchse 32 am Lager 30 in der Mitte der Rolle in axialer Richtung etwas vergrößert. Die Teilung des Außenrohrs 23 bringt gegebenenfalls Montagevorteile.

Damit es nicht zu Überhitzungen des transportierten Guts oder Verbrennungen durch Berührung kommt, kann eine nicht dargestellte Wärmeisolationsschicht partiell auf der Rollenoberfläche aufgetragen werden. Ein derartiger Berührschutz kann beispielsweise durch ein Netz gewährleistet werden. Durch dieses Netz hindurch kann die Wärme nach wie vor beispielsweise durch Konvektion abgeleitet werden.

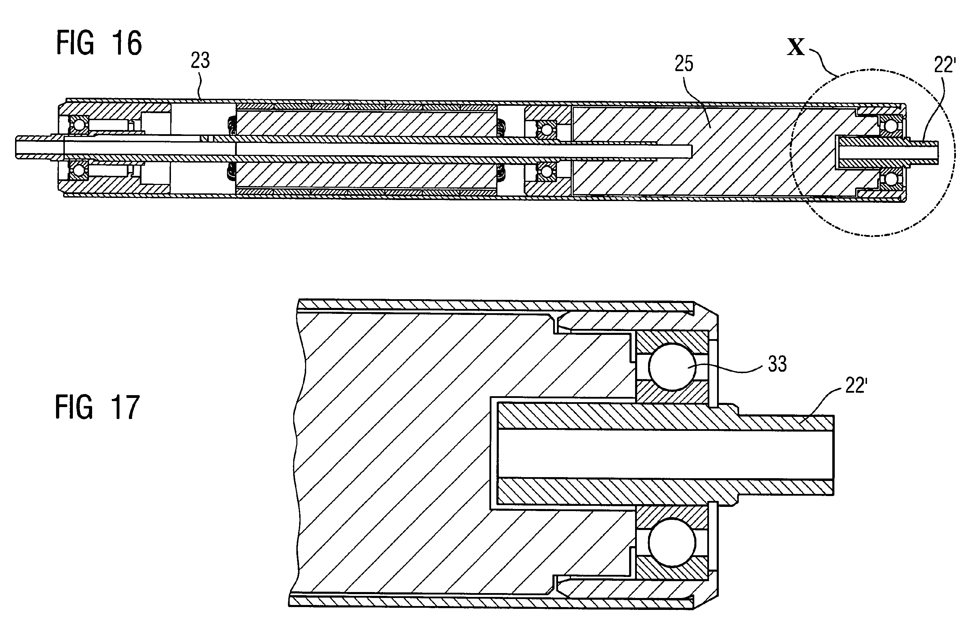

Ein viertes Ausführungsbeispiel zur Entwärmung einer Rolle mit integriertem Rollenmotor ist in den FIG 16 und 17 dargestellt. Auch hier entspricht FIG 17 einer vergrößerten Darstellung des Ausschnitts X von FIG 16. Neben der passiven Entwärmung über die Rollenoberfläche erfolgt hier auch eine passive Entwärmung in axialer Richtung. Dies bedeutet, dass der Kühlkörper 25 die Wärme auch auf die Teilachse 22', die hier auch die Funktion des Lagerschilds hat, ableitet. Dazu ist der Kühlkörper 25, der mit der Teilachse 22' drehfestverbunden ist, um das Lagerschild 22 geformt. Ebenso reicht der Kühlkörper 25 auch an das dortige Lager 33.

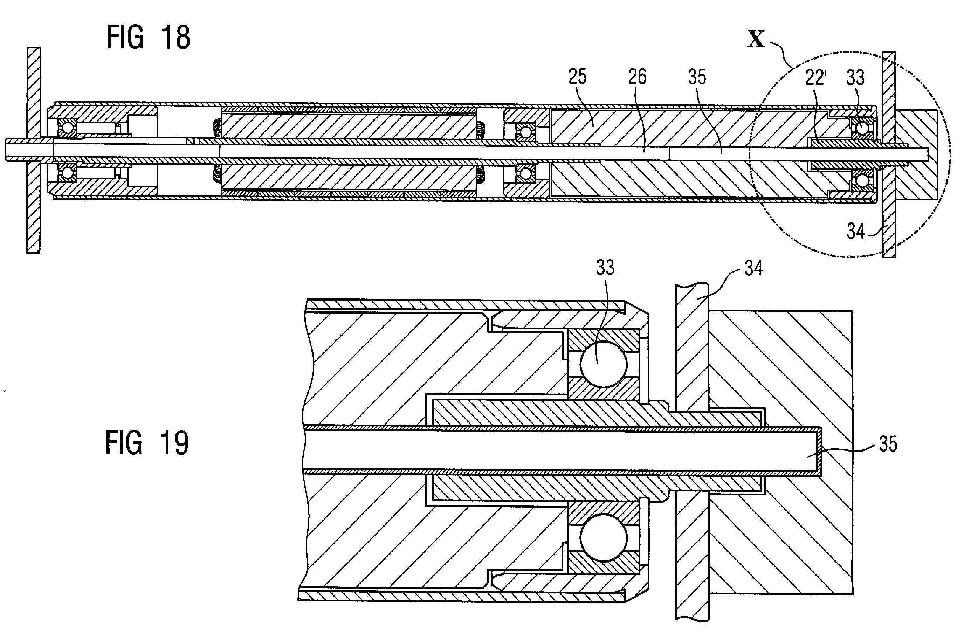

Eine fünfte Ausführungsform zur Entwärmung der Rolle ist in den FIG 18 und 19 dargestellt. FIG 19 stellt wiederum den vergrößerten Ausschnitt X von FIG 18 dar. Der wesentliche Aufbau der Rolle entspricht dem von FIG 16. Zusätzlich erfolgt hier eine thermische Anbindung des Lagerschilds beziehungsweise der Teilachse 22' an eine Aluminiumwange 34, in der die Rolle befestigt ist. Zur besseren Übertragung der Wärme zu der Aluminiumwange 34 wird eine zweite Heatpipe 35 eingesetzt, die durch das Lager 33 hindurch aus der Rolle ragt.

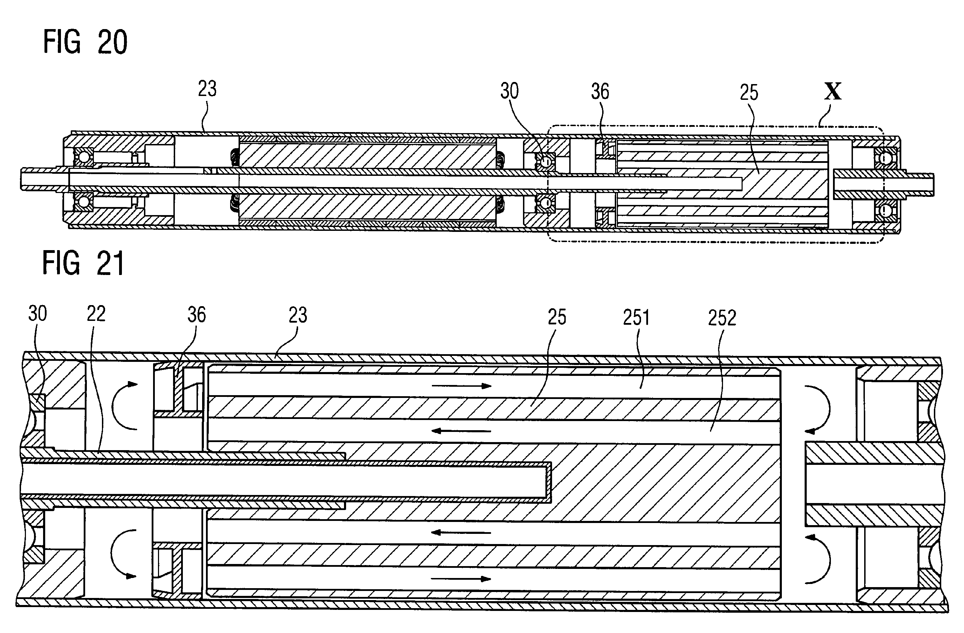

Falls die passive Entwärmung nicht ausreichend ist, kann die Entwärmung beispielsweise durch Eigenlüfter gefördert werden. Ein diesbezügliches sechstes Ausführungsbeispiel zur Entwärmung einer Rolle ist in den FIG 20 und 21 dargestellt. FIG 21 stellt auch hier den vergrößerten Ausschnitt X von FIG 20 dar. Der Aufbau der Rolle entspricht im Wesentlichen dem von FIG 12. Zwischen dem Lager 30 und dem Kühlkörper 25 ist ein Lüfterrad 36 koaxial mit diesen angeordnet. Darüber hinaus besitzt der Kühlkörper 25 axial verlaufende Kühlkanäle 251 und 252. Ein Teil der Kühlkanäle 251 verläuft radial außen und ein anderer Teil 252 im Kühlkörper 25 radial innen. An den Stirnseiten des Kühlkörpers sind Lufträume vorgesehen, die die radial innenliegenden und radial außenliegenden Kühlkanäle 251 und 252 miteinander verbinden.

Das Lüfterrad 36, das auch mit einem Lagerschild einteilig verbunden sein kann, ist mit dem Außenrohr 23 der Rolle drehfest verbunden. Der Kühlkörper 25 dagegen ist fest auf die Achse 22 montiert und führt keine Drehbewegung aus. Durch diese Relativbewegung des Lüfterrads 36 zu dem Kühlkörper 25 entsteht ein Umluftstrom wie er in FIG 21 mit den Pfeilen angedeutet ist. Der Kühlkörper 25 leitet damit die Wärme an die umgebende Luft insbesondere in den Kühlkanälen 252, die mit dem Lüfterrad 36 in die Nähe des Außenrohrs 23 gefördert wird. Hierdurch lässt sich die Entwärmung in radialer Richtung beschleunigen.

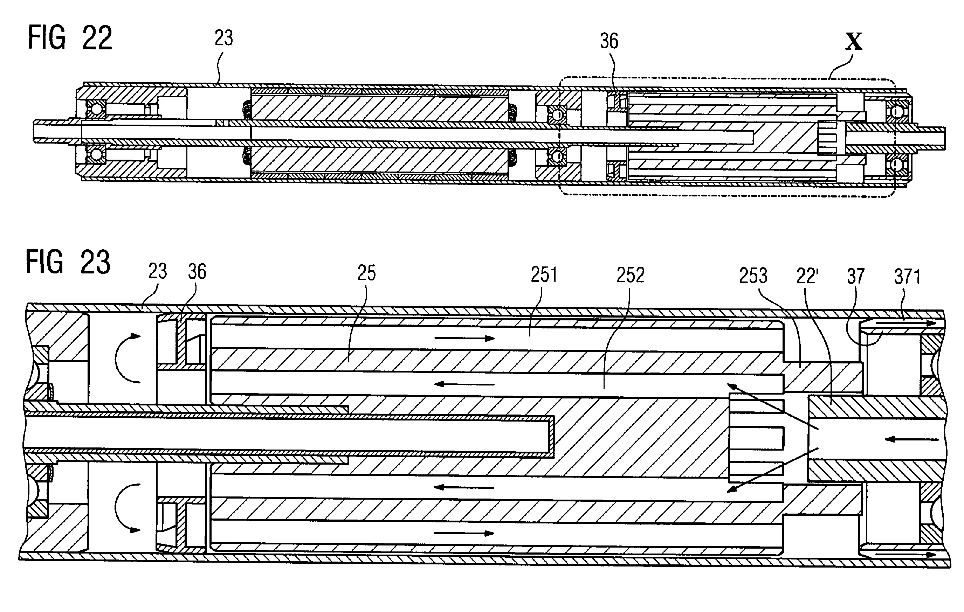

Die FIG 22 und 23 geben ein sechstes Ausführungsbeispiel zur Erwärmung von Rollen wieder. FIG 23 stellt auch hier den vergrößerten Abschnitt X von FIG 22 dar. Der Aufbau der Rolle entspricht im Wesentlichen dem von FIG 20. Auch hier ist ein Lüfterrad 36 im Inneren der Rolle vorgesehen. Im Gegensatz zu dem sechsten Ausführungsbeispiel in den FIG 20 und 21 ist hier die Entwärmung nicht mittels des Umluft-Prinzips sondern mittels des Abluftprinzips realisiert. Der entsprechende Kühlluftstrom ist in FIG 23 mit Pfeilen eingezeichnet. Die Kühlluft strömt durch das Lagerschild beziehungsweise die Teilachse 22' von außen ins Innere der Rolle. Von dort strömt die Kühlluft weiter durch die inneren Kühlkanäle 252, wird dann umgelenkt und strömt, gefördert durch den Lüfter 36, zurück durch die äußeren Kühlkanäle 251. In einem äußeren Lagerschildabschnitt 37 sind Bohrungen beziehungsweise Aussparungen 371 vorgesehen, durch die die Kühlluft aus der Rolle nach außen strömt. Damit dieser Strömungsverlauf gewährleistet werden kann, besitzt der Kühlkörper 25 einen rohrförmigen Fortsatz 253, der über die Teilachse 22' ragt und somit für eine entsprechende Dichtwirkung sorgt.

Alternativ zu dieser sechsten und siebten Ausführungsform kann auch eine nicht dargestellte Hohlachsen-Lüftung zur Entwärmung des Motors eingesetzt werden. Auch hier kann sich ein Lüfterrad im Inneren der Rolle befinden. Die Luftströmung verläuft in diesem Fall in axialer Richtung durch die Hohlachse der Rolle und durch Löcher in den Lagerschildabschnitten 22' und/oder 37.

Als weitere Variante zur Entwärmung des Außenläufermotors 24 kann eine Luftspalt-Lüftung vorgesehen sein. Hierbei verläuft der wiederum durch ein Lüfterrad angetriebene Luftstrom in axialer Richtung durch den Luftspalt des Außenläufermotors und ebenfalls durch Löcher in den Lagerschildabschnitten 22' und/oder 37.

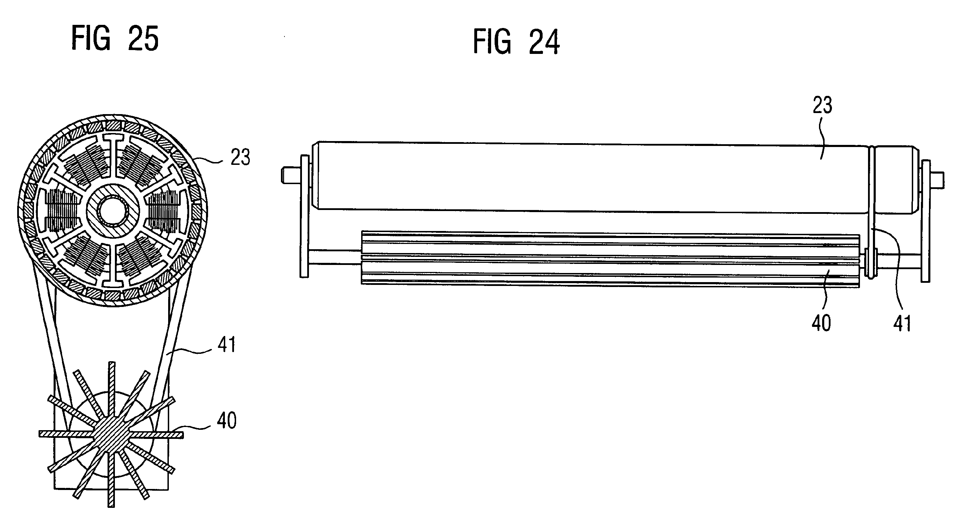

Eine achte Ausführungsform zur Entwärmung der Rolle ist in den FIG 24 und 25 dargestellt. FIG 24 zeigt eine Draufsicht und FIG 25 eine Querschnittsansicht einer extern belüfteten Rolle. Ein externer Lüfter 40 wird über einen Riemen 41 von dem Außenrohr 23 der Rolle angetrieben. Der Lüfter 40 und die Rolle sind zueinander achsparallel angeordnet. Die Schaufelräder des Lüfters 40 sorgen dafür, dass das Außenrohr 23 der Rolle mit Kühlluft umströmt wird.

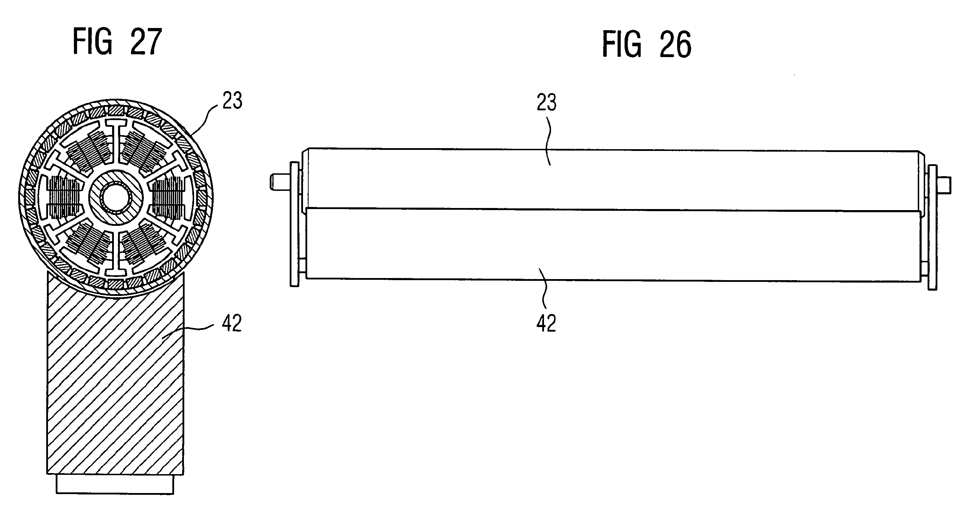

Die FIG 26 und 27 zeigen eine neunte Ausführungsform zur Entwärmung der Rolle mit integriertem Rollenmotor. Parallel zu der Rolle ist ein Wärmeabstreifer 42, an den das Außenrohr 23 Wärme durch Wärmestrahlung und Konvektion abgeben kann, angeordnet. Zwischen dem Außenrohr 23 und dem Wärmeabstreifer 42 befindet sich ein Luftspalt, damit die Rolle nicht gebremst wird. Der Wärmeabstreifer 42 wird intensiv gekühlt, so dass beim Vorbeistreichen des Außenrohrs 23 ausreichend Wärme an den Wärmeabstreifer 42 abgeführt wird. In einer alternativen Ausführungsform kann der Wärmeabstreifer 42 durch eine Wärmeableitrolle ersetzt werden.

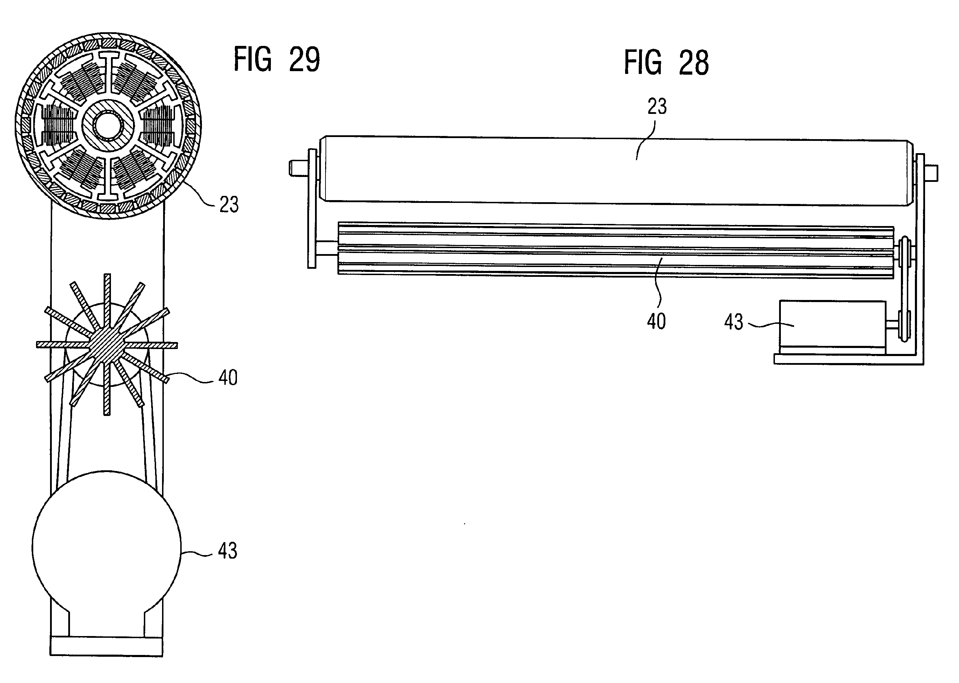

Die FIG 28 und 29 symbolisieren schließlich eine Aktivkühlung mit einem Fremdlüfter oder einer entsprechenden Einrichtung. In FIG 28 ist die Rolle mit externem Fremdlüfter in der Draufsicht und in FIG 29 im Querschnitt dargestellt. Der externe Lüfter 40, auch hier ein Tangentiallüfter, wird durch einen eigenen Lüftermotor 43 angetrieben.

Auch die Hohlachsen-Lüftung und die Luftspalt-Lüftung, wie sie oben bereits erwähnt wurden, kann durch Fremdlüfter erfolgen. Eine weitere Alternative zur aktiven Kühlung stellt eine Wärmepumpe dar. Hierzu könnte beispielsweise ein externer Kleinkompressor oder Peltier-Elemente zur Kühlung der Rollen vorgesehen sein.

In den oben genannten Ausführungsformen kann der Rollenmotor durch einen Oberwellenmotor, der die Oberwellen des Luftspaltfelds ausnützt, realisiert werden. Damit wird es möglich, kleine Motoren hochpolig aufzubauen. Durch den hochpoligen Aufbau benötigt der Motor weniger Eisen und es kann mehr Kupfer eingebracht werden, so dass die Stromwärmeverluste reduziert werden.

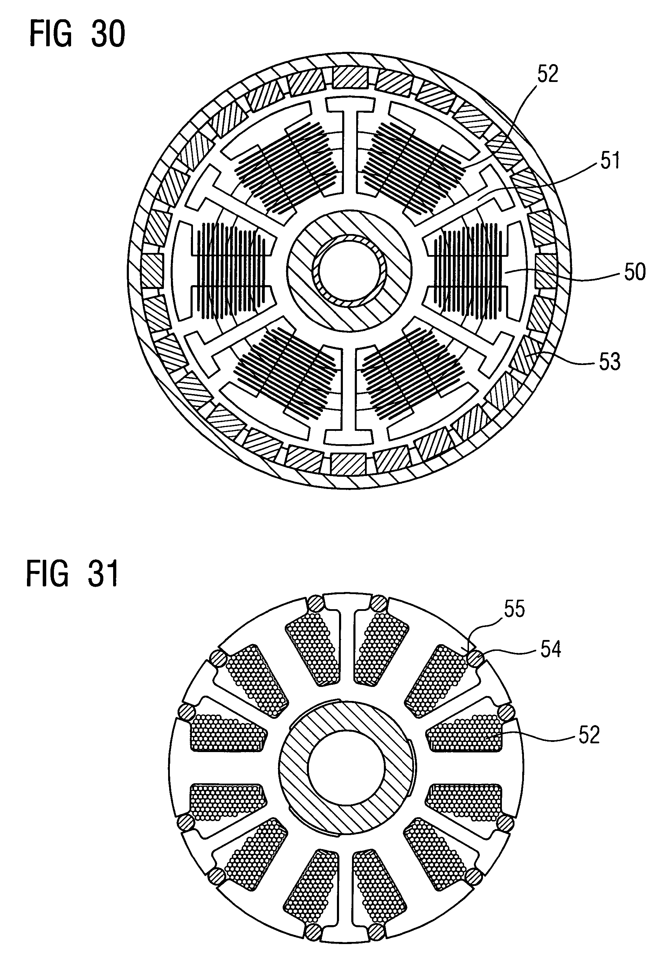

In FIG 30 ist ein derartiger Oberwellenmotor skizzenhaft widergegeben. Vorteilhaft ist ein Statoraufbau mit abwechselnd breiten Zähnen 50 und schmalen Zähnen 51, wobei nur jeder breite Zahn 50 mit einer Wicklung 52 umwickelt wird. Die Zahnteilungsbreite τ_{zb} des breiten Zahns 50 lässt sich im Verhältnis zur Polteilungsbreite τₚ der Rotorpole angeben mit: τ_{zb} > 2,5τₚ. Diesbezüglich sei auf die Offenlegungsschrift 101 33 654 A1 des vorliegenden Anmelders verwiesen.

In FIG 30 ist als Beispiel ein 28-poliger Rotor, der 28 Einzelmagnete 53 aufweist, mit einem Stator gezeigt, der sechs breite Zähne 50 und sechs schmale Zähne 51 hat. Der Stator erzeugt als Grundpolzahl 2p_{G} = 4. Der Motor arbeitet somit mit der siebten Oberwelle des Luftspaltfelds. Für das Teilungsverhältnis τ_{zb}/τp gilt im Beispiel: τ_{zb}/τₚ ≈ 3.

Die oben genannten Rollenmotoren können derart betrieben werden, dass keine separaten Rotorlagegeber notwendig sind. Ein mögliches Verfahren hierzu nutzt die EMK des Motors, um die Rotorlage zu detektieren und die Motorphasen entsprechend zu bestromen. Der Aufbau ohne Rotorlagegeber bietet deutliche Vorteile für eine einfache Motorkonstruktion und einfache Fertigungstechnik.

Die oben beschriebenen Rollen und Rollenmotoren können durchaus sehr hohe Baulängen erreichen. Bei hohen Baulängen und extremer Nutfüllung ist jedoch ein axiales Einbringen eines Deckschiebers als Nutverschluss für den Stator sehr problematisch. Daher kann beispielsweise als Nutverschluss ein Rundmaterial in den Nutspalt radial eingebracht werden. Dazu sollte der Durchmesser des Rundmaterials gegenüber dem Nutspalt ein Übermaß besitzen, so dass es beim Einbringen zu einer Verpressung kommt, mit der die Wicklung in ihrer Lage gehalten werden kann. Ist dieses Rundmaterial in Form einer Papierschnur ausgebildet, so kann sie mit Harz getränkt und entsprechend in der Nut verklebt werden. In FIG 31 ist dieser Nutverschluss des Stators skizziert. Das Rundmaterial 54 ist in dem jeweiligen Nutspalt 55 angeordnet und verschließt damit die darunter liegende Nut, in der sich jeweils eine Wicklung 52 befindet.

Bei gewissen Anwendungen müssen die Rollen eines Rollensystems abgebremst werden können. Hierzu ist erfindungsgemäß ein Bremssystem vorgesehen, das in die Rolle integriert werden kann.

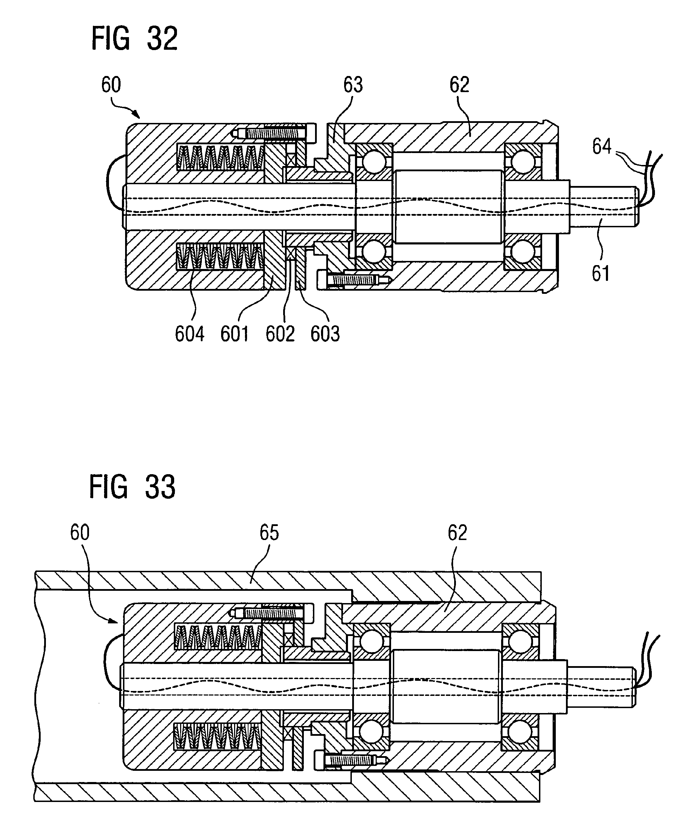

FIG 32 zeigt hierzu ein Bremssystem 60 im Querschnitt, das an einer feststehenden Achse 61 montiert ist. Auf der Achse 61 ist ferner eine Lagerbuchse 62 zur Aufnahme einer Walze oder Rolle beziehungsweise eines Motors doppelt gelagert. Mit der Lagerbuchse 62 drehfest verbunden ist ein Lagerschild 63, das die Drehbewegung und das Drehmoment von der Lagerbuchse 62 zu der Bremseinheit 60 überträgt.

In der Skizze von FIG 32 ist die Bremseinheit 60 als Federdruckbremse dargestellt. Sie besitzt koaxial zueinander angeordnet eine axial bewegliche Ankerplatte 601, eine mit einer Verzahnung versehene und axial bewegliche Reibscheibe 602 und eine Reibfläche 603. Zur Bewegung der Ankerplatte 601 und der Reibscheibe 602 dient ein Magnetkörper 604 mit Federn.

Die Funktionsweise dieser Bremseinheit 60 entspricht der einer handelsüblichen Federdruckbremse. Nach dem Abschalten der Bremsenbetriebsspannung wird die mit der Verzahnung versehene und axial bewegliche Reibscheibe 602 über die in dem Magnetkörper 604 befindlichen Federn und die axial bewegliche Ankerplatte 601 gegen die Reibfläche 603 gedrückt. Das durch die Normalkraft erzeugte Reibmoment bremst die sich drehenden Teile, wie das Lagerschild 63 und die Lagerbuchse 62, ab. Das Drehmoment wird über die feststehende Achse 61 auf die beispielsweise aus Wangen 34 (vergleiche FIG 18) gebildete Tragkonstruktion für die Rollen übertragen. Die hierzu notwendige Bestromung der Bremse erfolgt vorteilhafterweise durch ein Leistungskabel 64, das durch die hohl ausgeführte Achse 61 der Bremseinheit 60 zugeführt ist.

FIG 33 zeigt eine typische Einbausituation der in FIG 32 dargestellten Bremseinheit 60. Die Bremseinheit 60 ist hier in ein Rohr 65 integriert. Dieses Rohr 65 kann Teil einer Walze, einer Rolle, eines Außenläufermotors etc. sein. Es liegt auf der Lagerbuchse 62 auf und dreht sich mit ihr.

Das in die Rolle beziehungsweise den rotierenden Mantel integrierbare Bremssystem und die ebenfalls integrierbare Antriebseinheit können somit als Einheit betrachtet werden, die eine einfache und schnelle Montage gewährleistet. Die individuell ausführbare mechanische Schnittstelle zwischen der Bremseinheit und dem Rotationskörper, die als Flansch, Press-oder Schrumpfverbindung aufgebaut sein kann, ermöglicht auch eine einfache Demontage.

Durch den Einsatz mehrerer Bremsen oder Bremseinheiten pro Antriebseinheit, z. B. an beiden Enden einer Rolle, kann die Bremsleistung vervielfacht und angepasst werden.

Die thermische Entkopplung des Bremssystems vom Motorsystem ermöglicht auch den Einsatz bei thermisch sensiblen Einsatzfällen, wie z. B. der Herstellung von Folien oder Nahrungsmitteln. Die Entkopplung des Bremssystems vom Motor bietet darüber hinaus den Vorteil, dass bei Einsätzen, wo reine Bremsen notwendig sind, nicht ein Motor mit Bremsfunktionalität eingebaut werden muss.

Andere Einsatzzwecke für die oben genannten Rollen und Rollenmotoren sind Rollenbahnen in der Fördertechnik von Post- und Paketverteilerzentren, Sicherheits- und Verzögerungselemente (Bahnsteuerung) in Textil- und Papierveredelungsanlagen sowie bei Textilspindeln und Galetten.

## Patentansprüche

1. Rolle mit einem integrierten Rollenmotor (24), wobei eine Kühleinrichtung (25,26) ebenfalls in die Rolle integriert oder außerhalb angeordnet ist.

2. Rolle nach Anspruch 1, wobei die Kühleinrichtung (25,26) einen Kühlkörper (25) und eine erste Heatpipe (26) umfasst.

3. Rolle nach Anspruch 1 oder 2, wobei der Rollenmotor (24) ein Außenläufermotor ist und ein Außenrohr (23) der Rolle als Rückschlussrohr des Außenläufermotors dient.

4. Rolle nach einem der Ansprüche 1 bis 3, wobei das Außenrohr (23) der Rolle senkrecht zu ihrer axialen Richtung geteilt (31) ist und der Rollenmotor (24) in einem der Teile angeordnet ist.

5. Rolle nach einem der Ansprüche 1 bis 4, wobei eine Wärmeisolationsschicht auf der Rollenoberfläche aufgetragen ist.

6. Rolle nach einem der Ansprüche 1 bis 5, wobei eine zweite Heatpipe (35) teilweise in der Kühleinrichtung (25,26) angeordnet ist, um Wärme von dem Kühlkörper (25) in ein Lagerschild (22') zu transportieren.

7. Rolle nach einem der Ansprüche 1 bis 6, wobei ein Lagerschild als Lüfterrad ausgestaltet oder ein separates Lüfterrad (36) im Inneren der Rolle angeordnet ist, um eine Kühlung durch Umluft, Abluft, Hohlachsenlüftung und/oder Luftspalt-lüftung zu erzielen.

8. Rolle nach einem der Ansprüche 1 bis 7, wobei die Kühleinrichtung (25,26) einen Eigenlüfter (36,40), einen Fremdlüfter (40), einen Wärmeabstreifer (42), eine Wärmeableitrolle oder eine Wärmepumpe umfasst.

9. Rolle nach einem der Ansprüche 1 bis 8, wobei der Rollenmotor (24) ein Oberwellenmotor (50 bis 53) ist.

10. Rolle nach einem der Ansprüche 1 bis 9, wobei die elektromotorische Kraft des Rollenmotors (24) zur Ermittlung der Rotorlage abgreifbar ist.

11. Rolle nach einem der Ansprüche 1 bis 10, wobei der Nutverschluss des Rollenmotors (24) durch radial eingebrachtes Rundmaterial (54) realisiert ist.

12. Verfahren zum Entwärmen zumindest eines Abschnitts einer Rolle, in die ein Rollenmotor (24) integriert ist, wobei Abwärme des Rollenmotors (24) zu einer Kühleinrichtung (25, 26), die ebenfalls in die Rolle integriert oder außerhalb angeordnet ist, transportiert wird.

13. Verfahren nach Anspruch 12, wobei das Transportieren der Abwärme des Rollenmotors (24) zu einem Kühlkörper mit Hilfe eine Heatpipe (26,35) erfolgt.

14. Rolle mit einem Rollenmotor mit einem Außenläufer, der eine Vielzahl von Einzelmagneten (5) aufweist, die am Innenumfang eines Rückschlussrohrs (7) angeordnet sind, wobei eine Trägereinrichtung (1) zumindest teilweise radial innerhalb der Einzelmagnete (5) angeordnet ist und radial nach außen weisende, axial verlaufende Abstandshalter (2) zum Beabstanden der Einzelmagnete (5) in Umfangsrichtung aufweist.

15. Rolle mit einem Rollenmotor mit einer Achse (10,14), auf der ein Stator (11,12) angeordnet ist, und einer Kontaktiereinrichtung zum Kontaktieren des Stators (11,12) mit Versorgungsleitungen, wobei die Achse in einen ersten Achsabschnitt (10) und zweiten Achsabschnitt (14) geteilt ist und die Kontaktiereinrichtung zwei Kontaktträger (13, 15) aufweist, wobei ein erster Kontaktträger (13) auf dem ersten Achsabschnitt (10) und ein zweiter Kontaktträger (15) auf dem zweiten Achsabschnitt (14) angeordnet ist, und wobei der erste und der zweite Kontaktträger (13,15) zur Herstellung einer elektrischen Verbindung ineinander herausnehmbar eingesteckt sind.

16. Rolle mit einem Rollenmotor mit
einem Außenläufer, der eine Vielzahl von Einzelmagneten (5) aufweist, die am Innenumfang eines Rückschlussrohrs (7) angeordnet sind,
einer Trägereinrichtung (1), die zumindest teilweise radial innerhalb der Einzelmagnete (5) angeordnet ist und die radial nach außen weisende, axial verlaufende Abstandshalter (2) zum Beabstanden der Einzelmagnete (5) in Umfangsrichtung aufweist,
einer Achse (10,14), auf der ein Stator (11,12) angeordnet ist,
einer Kontaktiereinrichtung zum Kontaktieren des Stators (11,12) mit Versorgungsleitungen,
wobei die Achse in einen ersten Achsabschnitt (10) und zweiten Achsabschnitt (14) geteilt ist und
die Kontaktiereinrichtung zwei Kontaktträger (13,15) aufweist, wobei ein erster Kontaktträger (13) auf dem ersten Achsabschnitt (10) und ein zweiter Kontaktträger (15) auf dem zweiten Achsabschnitt (14) angeordnet ist, und wobei der erste und der zweite Kontaktträger (13,15) zur Herstellung einer elektrischen Verbindung ineinander herausnehmbar eingesteckt sind.

17. Rolle nach Anspruch 1 mit einem Rollenmotor, welcher nach einem der Ansprüche 14 oder 15 oder 16 ausgebildet ist, wobei eine Bremseinrichtung (60) in die Rolle zum Bremsen der Rolle angeordnet ist.
